Europäisches Patentamt

European Patent Office

Office européen des brevets

(19)

(11) Publication number: **0 017 684**
**B1**

(12) **EUROPEAN PATENT SPECIFICATION**

(45) Date of publication of patent specification: **15.06.83**

(21) Application number: **79302528.9**

(22) Date of filing: **12.11.79**

(51) Int. Cl.³: **B 63 H 21/26, B 63 H 5/12, F 16 F 9/34**

(54) **Hydraulic cylinder for a propulsion unit of an inboard or outboard motor.**

(30) Priority: **23.04.79 JP 53498/79**

(43) Date of publication of application:
**29.10.80 Bulletin 80/22**

(45) Publication of the grant of the patent:
**15.06.83 Bulletin 83/24**

(84) Designated Contracting States:
**BE DE FR GB SE**

(56) References cited:
**DE - A - 2 145 675**
**DE - A - 2 548 049**
**FR - A - 2 137 982**
**FR - A - 2 355 210**
**US - A - 2 403 648**
**US - A - 3 003 724**
**US - A - 3 285 221**
**US - A - 3 724 615**
**US - A - 3 962 955**
**US - A - 3 983 835**
**US - A - 4 050 359**

(73) Proprietor: **SHOWA MANUFACTURING COMPANY LIMITED**
**6-20, 2-chome**
**Yaesu Chuo-ku, Tokyo (JP)**

(72) Inventor: **Nakamura, Tamotsu**
**110-12, Konodai**
**Iwata City Shizuoka Prefecture (JP)**

(74) Representative: **Jennings, Guy Kenneth et al,**
**GILL JENNINGS & EVERY 53/64 Chancery Lane**
**London WC2A 1HN (GB)**

Courier Press, Leamington Spa, England

## Hydraulic cylinder for a propulsion unit of an inboard or outboard motor

In small craft such as motorboats, the propeller is formed as part of a propulsion unit and the position of the propeller with respect to the hull may be operated by a hydraulic cylinder, which may also act as a shock absorber if the propeller strikes an obstacle when under way. The cylinder thus acts as a tilting unit for lifting the propeller when the boat is on land and for setting it at the most efficient angle, i.e. trimming it, when under way.

In order to act as a shock absorber to prevent breakage when the propeller strikes an obstacle, an oil hole for generating a damping force needs to be formed in the piston of the cylinder forming the tilting unit and must be provided with a non-return or check valve. However, with the construction of cylinder described in US—A—3,003,724 the check valve tends to leak while holding the propeller in the trimmed position while under way and therefore the set angle of the propeller will gradually vary.

An object of this invention is to provide a hydraulic cylinder for the propulsion units of either inboard or outboard motors which does not suffer from this defect and which will provide a shock absorbing action with adequate damping force if the propeller strikes an obstacle.

In accordance with this invention, a hydraulic cylinder for a propulsion unit of an inboard or outboard motor comprising an oil cylinder having an oil inlet and outlet port at each end and a piston fitting in the cylinder and having an oil hole fitted with a check valve is characterised by a disc valve having two concentric annular sealing members made of elastic material which is biased against one face of the piston so that the space between the two sealing members is in communication with the end of the oil hole whereby the disc valve may open and close the oil hole simultaneously with the check valve according to the direction of movement of the piston.

The piston thus includes two valves arranged in series. The addition of the disc valve with its elastic sealing members prevents any leakage of oil during operation and the check valve controls the damping force under shock conditions.

Embodiments of the invention will now be described by way of example, with reference to the accompanying drawings, in which:—

Figure 1 is a schematic diagram showing a hydraulic cylinder according to the present invention as used in an outboard motor;

Figure 2 is a longitudinal sectional view showing an embodiment of the present invention;

Figure 3 is a plan view of a disc valve shown in Figure 1;

Figure 4 is a sectional view on line IV—IV in Figure 2;

Figure 5 is a longitudinal sectional view to an enlarged scale of an alternative form of piston;

Figure 6 is a view similar to Figure 4 of still another form of piston; and

Figure 7 is a schematic diagram showing a hydraulic cylinder according to the present invention as used in an inboard motor.

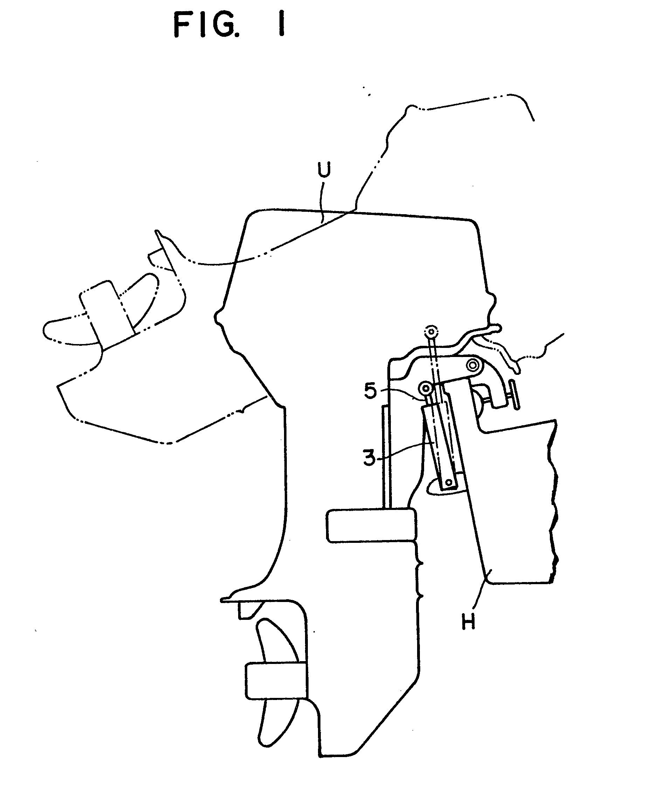

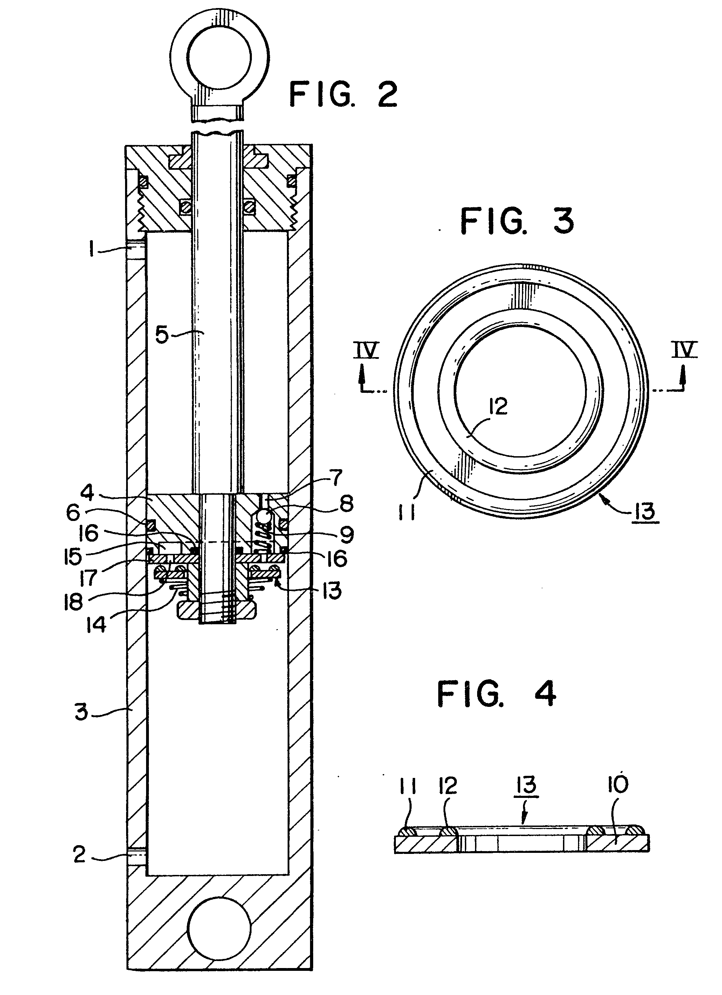

As shown in Figures 1 and 2, a piston 4 is slidably fitted in an oil cylinder 3 having oil inlet and outlet ports 1 and 2 at respective ends, the piston rod 5 extending through one end of the oil cylinder 3. The piston 4 is fitted with an O-ring 6 and is formed with an oil hole 7 fitted with a non-return or check valve 8 comprising a steel ball biased into contact with a seating at the end of the hole 7 by a coil spring 9.

In addition, as shown in the plan view of Figure 3 and the sectional view of Figure 4, a disc valve 13 comprising concentric annular sealing members 11 and 12 made of elastic material such as rubber secured to one face of an annular base plate 10 co-operates with the lower face of the piston 4. The valve 13 is biased by means of a comparatively weak spring 14 so that the annular space between the sealing members 11 and 12 communicates with the opening at the lower side of the valve 8 in the oil hole 7. The piston 4 has an annular groove 15 in its lower surface, into which the oil hole 7 opens. The groove is closed by a cover plate 17 which is sealed by an O-ring 16 and has a number of holes 18 communicating with the space between the sealing members 11 and 12.

In use, the oil cylinder 3 is pivotally connected to the hull H of the boat and the rod 5 is pivotally connected to a propulsion unit U comprising the propeller and motor. When pressure oil is fed in through oil port 2 the rod 5 is extended and the propeller will be lifted above the water level to the position shown in dotted lines in Figure 1. By adjusting the piston 4 to an appropriate position and closing the oil port 1, the propeller can be set at the most efficient angle for propulsion purposes.

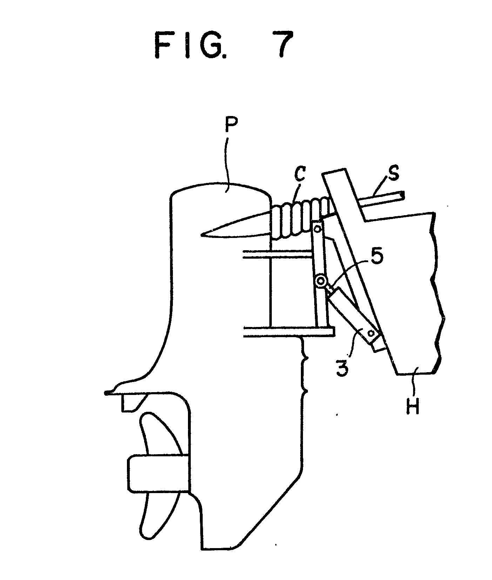

In the alternative arrangement of Figure 7, as applied to an inboard motor, the oil cylinder 3 is again pivotally connected to the hull H of the boat and the rod 5 is connected to the propulsion unit P which includes the propeller, gearing and so forth, but not the motor, which is mounted inboard and is not shown, the drive being taken through a drive shaft S and flexible coupling C.

If in the propulsion position the propeller strikes an obstacle, the rod 5 will have an upward force exerted on it so that the check valve 8 and the disc valve 13 will open and the piston 4 will move upwards. The propeller will thus be prevented from damage and the damping force will be set to an appropriate value by the force of the spring 9. Since the pressure receiving area of the ball check valve 8 is so small, a desired damping force can be obtained with a very small and weak spring 9. As the ball check valve 8 cannot completely prevent the reverse flow of oil, in the absence of the disc valve 13 the high pressure oil would gradually leak into the space above the piston 4 and the propeller setting angle would fluctuate. However, since the disc valve 13 is fitted with sealing members 11 and 12 of material such as rubber, the leakage can be completely prevented and the propeller setting angle can be prevented from fluctuating while under way. The pressure receiving area of the disc valve 13 is so large that, if an appropriate damping force were to be obtained from the valve 13, the spring 14 would have to be made very large and strong. However, in a cylinder according to the present invention, the damping force is obtained from the ball check valve 8, and the function of the valve 13 is to prevent leakage under steady conditions. Consequently the spring 14 can be made quite weak and small or can even be omitted altogether and the valve device is thus quite small and light.

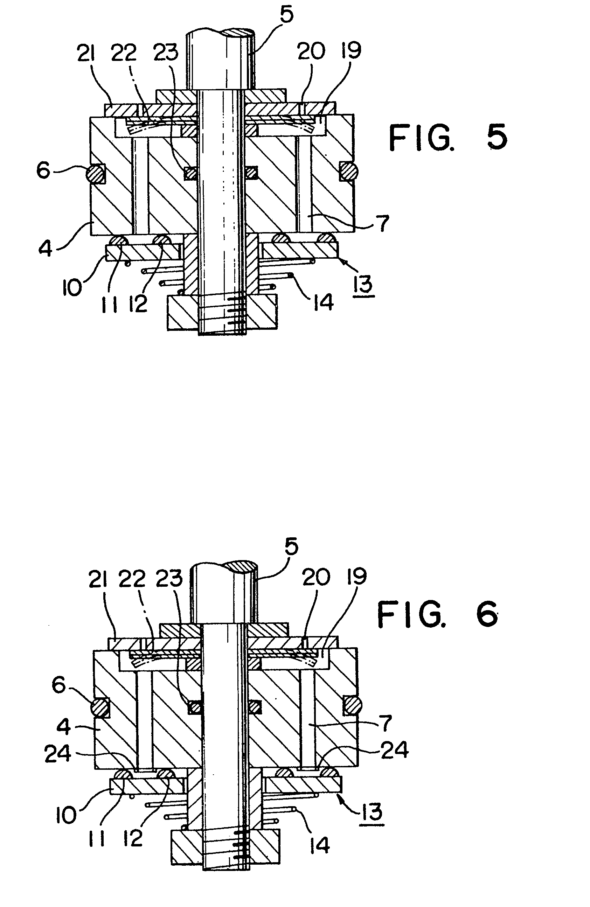

In the alternative construction of piston shown in Figure 5, a cavity 19 is formed in the upper face of the piston 4 in communication with several oil holes 7 and is sealed by a cover plate 21 having small holes 20. A disc valve 22 is formed by an elastic member arranged in the cavity 19 so as to close the holes 20. An O-ring 23 is fitted to the piston rod 5. Therefore, when the piston 4 moves upwardly, the valve member 22 will bend as shown by the chain dotted lines and the holes 20 will open. Thus, exactly the same operation and effect can be obtained as in the previous example.

Figure 6 shows a modification of the construction of Figure 5 in which, in order to prevent the sealing members 11 and 12 from being sucked into the holes 7 by a quick oil pressure variation, each oil hole 7 facing the disc valve 13 is provided at its lower end with an annular projection 24.

Thus, in a cylinder according to the present invention, leakage through the valve arrangement of the piston is effectively completely prevented so that variation of the propeller setting angle can be eliminated. Further, since no strong spring is required, the damping force under shock conditions can be set without difficulty at an appropriate value.

## Claims

1. A hydraulic cylinder for a propulsion unit (U, P) of an inboard or outboard motor comprising an oil cylinder (3) having an oil inlet (1) and outlet port (2) at each end and a piston (4) fitting in the cylinder (3) and having an oil hole (7) fitted with a check valve (8, 22) characterised by a disc valve (13) having two concentric annular sealing members (11, 12) made of elastic material which is biased against one face of the piston so that the space between the two sealing members (11, 12) is in communication with the end of the oil hole (7) whereby the disc valve (13) may open and close the oil hole (7) simultaneously with the check valve (8) according to the direction of movement of the piston.

2. A hydraulic cylinder according to claim 1 characterised by a cover plate (17) extending over the end of the oil hole (7) and having a hole (18) communicating with the oil hole (7), the cover plate (17) constituting the face of the piston (4) engaged by the disc valve (13).

3. A hydraulic cylinder according to claim 2 characterised in that the body of the piston (4) has an annular groove (15) which communicates with the oil hole (7) and is closed by the cover plate (17), the cover plate (17) having a ring of holes (18) communicating with the space between the two sealing members (11, 12) of the disc valve (13).

4. A hydaulic cylinder according to claim 2 or claim 3 wherein the check valve (8) comprises a ball engaging a seating within the oil hole (7) and a spring (9) extending between the ball and the cover plate (17).

5. A hydraulic cylinder according to claim 1 wherein the face of the piston remote from the disc valve is formed with a cavity (19) which is closed by a cover plate (21) having small holes (20), the check valve comprising a disc of elastic material (22) arranged in the cavity to overlie the small holes (20).

6. A hydraulic cylinder according to claim 5 including an annular projection (24) surrounding the end of the or each oil hole (7) on the face of the piston engaged by the disc valve (13).

7. The combination of a propulsion unit of an inboard or outboard motor and a hydraulic cylinder according to any one of the preceding claims.

## Revendications

1. Cylindre hydraulique pour un dispositif de propulsion (U, P) d'un moteur à bord ou hors-bord comprenant un cylindre à huile (3) ayant un orifice d'entrée d'huile (1) et de sortie d'huile (2) à chaque extrémité et un piston (4) monté dans le cylindre (3) et ayant un trou d'huile (7) équipé d'un clapet (8, 22) de retenue, caractérisé par un clapet à disque (13) ayant deux éléments annulaires concentriques (11, 12) d'étanchéité réalisés en matière élastique, qui est sollicité contre une face du piston de manière qui l'espace entre les deux éléments (11, 12) d'étanchéité soit en communication avec l'extrémité du trou d'huile (7) afin que le clapet à disque (13) puisse ouvrir et fermer le trou d'huile (7) simultanément avec le clapet de retenue (8) conformément au sens du mouvement du piston.

2. Cylindre hydraulique selon la revendication 1, caractérisé par une plaque (17) de recouvrement qui s'étend au-dessus de l'extrémité du trou d'huile (7) et qui présente un trou (18) communiquant avec le trou d'huile (7), la plaque de recouvrement (17) constituant la face du piston (4) contre laquelle porte le clapet à disque (13).

3. Cylindre hydraulique selon la revendication 2, caractérisé en ce que le corps du piston (4) présente une gorge annulaire (15) qui communique avec le trou d'huile (7) et qui est fermée par la plaque de recouvrement (17), la plaque de recouvrement (17) comportant un anneau de trous (18) communiquant avec l'espace entre les deux éléments d'étanchéité (11, 12) du clapet à disque (13).

4. Cylindre hydraulique selon la revendication 2 ou la revendication 3, dans lequel le clapet de retenue (8) comprend une bille portant contre un siège à l'intérieur du trou d'huile (7) et un ressort (9) s'étendant entre la bille et la plaque (17) de revouvrement.

5. Cylindre hydraulique selon la revendication 1, dans lequel la face du piston éloignée du clapet à disque est formée avec une cavité (19) qui est fermée par une plaque (21) de recouvrement ayant des petits trous (20), le clapet de retenue comprenant un disque en matière élastique (22) agencé dans la cavité pour recouvrir les petits trous (20).

6. Cylindre hydraulique selon la revendication 5, comprenant une saillie annulaire (24) entourant l'extrémité du ou de chaque trou d'huile (7) sur la face du piston contre laquelle porte le clapet à disque (13).

7. Combinaison d'un dispositif de propulsion d'un moteur à bord ou hors-bord et d'un cylindre hydraulique selon l'une quelconque des revendications précédentes.

## Patentansprüche

1. Hydraulischer Zylinder für eine Antriebseinheit (U, P) eines Innen- oder Außenbordmotors umfassend einen Ölzylinder (3) mit einem Öleinlaß (1) und einer Auslaßöffnung (2) an jedem Ende und einem Kolben (4), der in den Zylinder (3) paßt und eine Ölbohrung (7) besitzt, die mit einem Kontroll- bzw. Steuerventil (8, 22) ausgestattet ist, gekennzeichnet durch eine Scheibenventil (13), das zwei konzentrische ringförmige Dichtungsglieder (11, 12) aus elastischem Material besitzt, das gegen die eine Kolbenfläche derart beaufschlagt ist, daß der Raum zwischen den zwei Dichtungsgliedern (11, 12) in Verbindung mit dem Ende der Ölbohrung (7) steht, wodurch das Scheiben- bzw. Tellerventil (13) die Ölbohrung (7) gleichzeitig mit dem Kontroll- bzw. Steuerventil (8) entsprechend der Bewegungsrichtung des Kolbens öffnen und schließen kann.

2. Hydraulischer Zylinder nach Anspruch 1, gekennzeichnet durch eine Deckplatte (17), die sich über das Ende der Ölbohrung (7) erstreckt und eine Öffnung (18) besitzt, die mit der Ölbohrung (7) in Verbindung steht, wobei die Deckplatte (17) die Fläche des Kolbens (4) bildet, die in Verbindung mit dem Scheiben- bzw. Tellerventil (13) steht.

3. Hydraulischer Zylinder nach Anspruch 2, dadurch gekennzeichnet, daß der Körper des Kolbens (4) eine ringförmige Nut (15) besitzt, die mit der Ölbohrung (7) in Verbindung steht und durch die Deckplatte (17) geschlossen wird, wobei dei Deckplatte (17) einen Ring von Öffnungen (18) umfaßt, die in Verbindung mit dem Raum zwischen den beiden Dichtungsgliedern (11, 12) des Tellerventils (13) stehen.

4. Hydraulischer Zylinder nach Anspruch 2 oder Anspruch 3, worin das Kontrollventil (8) eine Kugel enthält, die in Eingriff mit einem Sitz innerhalb der Ölbohrung (7) steht und eine Feder (9) sich zwischen der Kugel und der Deckplatte (17) erstreckt.

5. Hydraulischer Zylinder nach Anspruch 1, wobei die entfernt vom Tellerventil liegende Kolbenfläche mit einem Hohlraum (19) ausgebildet ist, der durch eine Deckplatte (21) mit kleinen Öffnungen (20) verschlossen ist, wobei das Steuer- bzw. Kontrollventil eine Scheibe aus elastischem Material (22) umfaßt, die derart im Hohlraum angeordnet ist, daß sie über den kleinen Löchern (20) angeordnet ist.

6. Hydraulischer Zylinder nach Anspruch 5, einschließlich eines ringförmigen Vorsprunges (44), der das Ende oder jede Ölbohrung (7) auf der Kolbenfläche umgibt, die mit dem Tellerventil (13) verbunden ist.

7. Kombination einer Antriebseinheit eines Innenoder Außenbordmotors und eines hydraulischen Zylinders nach irgendeinem der vorstehenden Ansprüche.

**0 017 684**

FIG. 1

# FIG. 2

# FIG. 3

# FIG. 4

FIG. 5

FIG. 6

3

# FIG. 7